Europäisches Patentamt

(19) European Patent Office

Office européen des brevets

(11) Publication number: **0 141 615
B1**

(12) EUROPEAN PATENT SPECIFICATION

(45) Date of publication of patent specification: **20.04.88**

(51) Int. Cl.⁴: **A 23 J 3/00, A 23 C 20/00**

(21) Application number: **84307306.5**

(22) Date of filing: **24.10.84**

(54) Process for producing a hydrolyzed vegetable protein isolate and the use thereof.

(30) Priority: **24.10.83 US 544912**

(43) Date of publication of application:
**15.05.85 Bulletin 85/20**

(45) Publication of the grant of the patent:
**20.04.88 Bulletin 88/16**

(84) Designated Contracting States:
**BE DE FR GB IT NL**

(56) References cited:
**FR-A-2 074 905
FR-A-2 388 047
US-A-4 315 946**

**CHEMICAL ABSTRACTS, vol. 88, no. 21, 22 May
1978, Columbus, Ohio (US); S.UDENFRIEND et
al.: "Fluorescent techniques for ultramicro
peptide and proteine chemistry", p. 251, no.
148327z**

(73) Proprietor: **RALSTON PURINA COMPANY
Checkerboard Square
St. Louis Missouri 63164 (US)**

(72) Inventor: **Cipollo, Kent Lee
5824 Bristlecone Court
St. Louis, MO 63129 (US)**
Inventor: **Cho, Iue Chung
4726 Stanhope Drive
St. Louis, MO 63128 (US)**
Inventor: **Warner, Gregory Paul
3021 Kell Lane
St. Louis, MO 63129 (US)**

(74) Representative: **Tubby, David George et al
MARKS & CLERK 57-60 Lincoln's Inn Fields
London WC2A 3LS (GB)**

# 0 141 615

**Description**

The present invention relates to a process for the production of a hydrolyzed vegetable protein isolate which is particularly suitable for the production of various food products, especially simulated dairy products such as cheese.

Vegetable protein isolates, especially soy isolates, have found widespread use in a variety of food products, but they have been difficult to adapt to the production of certain products, such as cheese, or beverages, such as diet or nutritious drinks. This is particularly true with the development of imitation or simulated cheese products, in which the normal cheese-making process of fermentation and ripening is not employed but instead the physical and taste characteristics of authentic cheese are simulated by the appropriate mixing of components, such as protein, fat and other ingredients. An imitation chesse product based upon a fermented, hydrolysed vegetable protein is, for example, disclosed in US—A—4 315 946.

Cheese products of various types, e.g. American, cheddar and mozzarella, which are in widespread use in food products, have a number of physical characteristics that are extremely difficult to reproduce in a simulated or imitation cheese product, particularly one containing soy or other vegetable protein as an ingredient. Of all of the physical characteristics of cheese which are difficult to reproduce, the melt characteristic presents the most difficulty. It would, therefore, be highly desirable to produce a vegetable protein isolate which can be used in the production of various food products, including beverages as well as various products such as imitation or simulated cheese, and which imparts to these products appropriate characteristics. In particular, it would be desirable to produce a product which can be used for preparing imitation cheeses having appropriate melt characteristics, but which is economical and reliable to produce on a commercial basis.

We have now found that this can be achieved by the enzymatic hydrolysis of an isoelectric-precipitated vegetable protein isolate, provided that the hydrolysis is controlled so as to provide a restricted number of available amino end groups, which is predetermined in relation to the characteristics of the product which it is desired to produce.

Thus, the present invention consists in a process for preparing a hydrolysed vegetable protein isolate, in which protein is precipitated at its isoelectric point from an aqueous extract of a vegetable protein material, and a slurry of the precipitated protein is subjected to enzymatic hydrolysis, characterised in that the enzymatic hydrolysis is terminated at a point to provide an isolate having from 5 to 19 moles of available amino end groups per $10^5$ g of solids, as measured by fluorescamine reaction or by any other technique having a comparable effect.

It has been determined that, if the enzymatic hydrolysis is controlled to produce a predetermined number of available amino end groups, a hydrolyzed vegetable protein isolate is obtained that can be employed in various food products, particularly in imitation or simulated cheeses, and which provides the imitation cheese product with excellent physical characteristics, particularly melt characteristics. The exact reasons for the importance of this controlled hydrolysis is not understood, however, it is apparent that other procedures that have been employed for the production of hydrolyzed vegetable proteins for use in cheese products have not appreciated the need for control of the hydrolysis to within a predetermined range in order to achieve the most desirable physical characteristics when that isolate is employed in products such as imitation cheese products. A range of available amino end groups of from 5 to 19 moles of available amino end groups per $10^5$ g of solids provides an isolate which can be used to produce an imitation cheese having highly satisfactory melt and other physical characteristics.

The vegetable protein used as a starting material in the process of the present invention may be derived from a variety of sources as is well-known in the art. The precise vegetable protein material employed is not particularly critical to the present invention and the material chosen will normally be chosen having regard to the normal commercial criteria, including availability, price and assurance of a continued supply. At present, protein materials derived from the oilseeds, such as soybeans, sesame seeds, cottonseeds, rapeseeds and peanuts, are relatively widely available and economical and these are, for that reason, preferred. Of these, the protein materials derived from soybeans are particularly widely available and relatively cheap and the present invention will therefore, be described primarily with reference to the production of a hydrolyzed protein isolate from soy materials; nevertheless, it should be appreciated that the present invention is not limited to this particular choice of materials and that it is generally suitable for use with a wide variety of protein materials from vegetable sources.

The following is a typical procedure which may be employed to produce a hydrolyzed protein isolate from soybeans and essentially the same procedure may be employed equally with other materials, although minor modifications may be required in conventional processing steps.

The starting material is preferbaly a protein material from which, in the case of oilseeds, the oil has first been removed. This may be done by crushing or grinding the soybeans or other oilseeds and passing them through a conventional oil expeller. However, it is preferable to remove the oil by solvent extraction techniques, using, for example, an aliphatic hydrocarbon such as hexane or an azeotrope of hexane with another material. These solvent-extraction techniques are conventionally employed for the removal of lipids or oil from vegetable protein materials and do not require any detailed description here. Following extraction to remove residual lipids and oil, a vegetable protein material, for example flakes, generally having a high degree of dispersibility is obtained.

2

The resulting solids, in the case of soybeans, can comprise soybean flakes, flour or meal, depending upon the degree of grinding. The proteins and many of the soluble sugars are then extracted from the other constituents of the soybean material (such as cellulosic material) by placing the flakes, meal or flour in an aqueous bath and then extracting with an aqueous medium to provide an aqueous extract having a pH of at least 6.0, preferably at least 6.5 and more preferably from 6.5 to 10.0. Where an elevated pH value is desired, particularly a pH value above 6.5, it is normally necessary to employ an alkaline material in the aqueous medium; typical alkaline materials include sodium hydroxide, potassium hydroxide, calcium hydroxide and other commonly accepted food grade alkalis; the particular choice of this material is in no way critical to the present invention. A pH value of about 7 or above is generally preferred, since alkaline extraction facilitates solubilization of the protein, but the exact pH value to be employed is not critical to the present invention and typically the pH of the aqueous extract will be at least 6.0 and preferably from 6.5 to 10. The weight ratio of aqueous extractant to vegetable protein material is typically from 5:1 to 20:1, more preferably about 10:1, but this, again, is not critical to the present invention.

It is also desirable, but not essential, in practicing this aqueous extraction that an elevated temperature be employed to facilitate solubilization of the protein; however, ambient temperatures are equally satisfactory, if desired. The exact temperature employed is not critical to the present invention and will be chosen having regard to the normal criteria employed in the aqueous extraction of vegetable proteins. As a guide, the actual extraction temperature may suitably range from ambient temperature to 120°F (49°C), the preferred temperature being about 90°F (about 32°C). The time required for extraction is similarly not critical and any period of time may be conveniently employed, the preferred time being about 30 minutes.

After extraction of the protein from the vegetable protein material, the resulting aqueous protein extract is preferably stored in a holding tank or other suitable container, whilst a second extraction is performed on the insoluble or residual solids from the first extraction step; this second extraction is not, of course, essential, but it does have the advantage that it removes any residual protein which may not have been removed during the first extraction and thus increases the yield of protein and hence the efficiency of the process. If this second extraction is carried out, it will be carried out in a manner similar to that of the first extraction, using an extractant having a pH which is preferably at least 6.0 and more preferably from 6.5 to 10.0. In any second extraction step, we prefer that the weight ratio of extractant to residual material should be from 4:1 to 15:1, more preferably about 6:1. Otherwise, the conditions of the second extraction step are essentially the same as those of the first extraction step. After separating the second aqueous extract, it is preferably combined with the first extract and the whole treated as described hereafter.

The resulting aqueous protein extract (which may or may not be a combination of the first and second extracts) will normally have a pH of at least 6.0, preferably from 6.5 to 10. The protein is then precipitated from this extract by adjusting the pH of the extract to a value at or near the isoelectric point of the protein, thus forming an insoluble precipitate. The exact pH to which the protein extract should be adjusted will vary, depending upon the particular vegetable protein source material employed; however, for soy protein, a typical pH for the isoelectric point of soy protein would be from 4.0 to 5.0 and more commonly from 4.4 to 4.6; the isoelectric points of other proteins are equally well-known in the art. The pH of the extract may be adjusted to a value within these ranges by adding a common acidic reagent, such as acetic acid, sulphuric acid, phosphoric acid, hydrochloric acid or any other acidic-reagent commonly used in the food industry.

After the protein has been precipitated, a concentration step is preferably carried out in order to concentrate the protein precipitate and remove as large a percentage of the whey as possible. The particular means employed to concentrate the protein precipitate is not critical and a wide variety of conventional processing techniques, including centrifugation, may be employed. If desired, the concentrated precipitate may be washed with water, to minimize contamination by the whey or aqueous liquor. After washing and isolating the precipitated protein, it is formed into a slurry.

The amount of water added to the precipitated protein to form the slurry is preferably sufficient to provide a slurry having a solids content of from 3 to 30% by weight, more preferably from 5 to 17% by weight. The pH of the slurry is then adjusted to a value appropriate to the enzyme which is to be employed for hydrolysis. In general, the enzymes available for hydrolysis of vegetable proteins require a pH value within the range from 3.0 to 8.5 and the preferred enzymes operate at a pH value from 6.5 to 7.5. The pH may be adjusted by the addition of an appropriate alkaline or acidic material, examples of which have been given above.

After formation of the slurry and, where required, adjustment of solids content and/or pH value, the slurry is enzymatically hydrolyzed; we prefer that the enzymatic hydrolysis should be carried out by the procedure described in US 3,694,221, which generally involves the application of dynamic heating (or "jet cooking") of the slurry at a temperature of at least 220°F (104°C) in order to expose the reactive sites in the protein molecules prior to enzymatic hydrolysis. However, this procedure for enzymatic hydrolysis, including pH value, solids content, time, enyzme, enzyme concentration and other procedures, represents only a preferred embodiment of the present invention and it is not intended to limit the present invention to any of these criteria. In particular, the need for or absence of jet cooking or heating prior to or subsequent to hydrolysis is not a critical feature of the present invention.

However, it is preferred in accordance with the present invention, at least in relation to the production of an isolate for use in an imitation cheese product, that, after formation of the slurry, the reactive sites on the protein molecule should be exposed by dynamic heating, as described in US 3,694,221. This involves passing the slurry through a jet cooker, preferably at a temperature of at least 220°F (104°C) for at least a few seconds; more preferably, the temperature is from 220 to 400°F (104—204°C) and the time is more preferably from 7 to 100 seconds. The exposure of reactive sites on the protein molecule achieved by dynamic heating facilitates enzymatic hydrolysis and provides a better degree of control of the required number of available amino end groups on the protein molecule.

After the desired dynamic heating or jet cooking, this step may be terminated by ejecting the heated slurry (which has been held under positive pressure for at least a few seconds and preferably from 7 to 100 seconds) into an atmosphere of lower pressure, typically a vacuum chamber, preferably operated at from 20 to 26 inches of Mercury (0.68—0.88 bars) in order to flash off water vapour, which thus cools the slurry to a temperature of from 120—125°F (49—52°C).

The cooled slurry may then be subjected to the enzymatic hydrolysis required by the present invention. The enzyme employed is a protease, preferably a protease such as bromelain, and the enzymatic hydrolysis is controlled to produce a controlled number of available amino end groups in the protein material, specifically from 5 to 19, preferably from 8 to 15, moles or amino end groups per $10^5$ g of solids, as measured by fluorescamine reaction. It has been determined that control of the number of available amino end groups produces an enzymatically hydrolyzed vegetable protein isolate which has highly desirable physical characteristics for various food products, particularly the production of imitation cheese.

The exact temperature, time and pH values at which the enzymatic hydrolysis is conducted are not critical to the present invention, since these can depend upon the specific enzyme employed. Although there are other ways of controlling the number of available amino end groups on the protein molecule, and any such method may be employed in the present invention, we have found it convenient to adjust the time of hydrolysis and amount of enzyme, in relation to the nature of the enzyme used, so as to control the production of available amino end groups. Thus, the amount of enzyme and time of hydrolysis will be chosen having regard to the predetermined number of available amino end groups desired.

Where a protease such as bromelain is employed, the enzymatic hydrolysis is preferably carried out for a period of from 10 to 30 minutes; the temperature of hydrolysis is preferably from 125 to 127°F (52—53°C) and the pH is preferably a value within the range from 6.5 to 7.5. The enzymatic hydrolysis can be arrested by the application of heat to deactivate the enzyme or by alteration of the pH, once the required number of amino end groups has been achieved. Following termination of the enzymatic hydrolysis, the hydrolyzed isolate may, if desired, be dewatered in order to produce a uniform, powdered, dried product; the particular means of drying or dewatering is not critical to the present invention. Flash drying techniques provide an economical and convenient method of producing powders having excellent dispersibility. Of the flash drying techniques, spray drying is preferred and provides the most convenient and economical method for producing dried protein isolates from the product of the process of the present invention.

The enzymatically hydrolyzed vegetable protein isolate produced as described above, either with or without drying, may be employed in the production of a food product, especially an imitation or simulated cheese product. The other ingredients of such products are well-known to those skilled in the art and many variations are possible, depending upon the desired characteristics of the product. Included in conventional recipe ingredients for simulated cheeses are fats and various fatty materials, such as fatty glycerides, fatty acids and other hydrogenated vegetable oils and animal fats. The exact amount of fat or similar material employed is entirely dependent upon the particular type and flavour of cheese to be produced.

Other typical ingredients for imitation cheeses include other protein materials, such as casein and sodium caseinate, which may be used together with the hydrolyzed protein isolate of the present invention to provide the required protein content of the imitation cheese. However, if desired, the hydrolyzed protein isolate produced by the present invention may provide all of this protein content.

Various other materials which may be incorporated in imitation cheeses include: flavouring agents; acids, such as lactic acid; emulsifiers; preservatives; stabilizers; various other salts; sweeteners; flavour-producing enzymes; and any other materials which may enhance the flavour or taste characteristics of the simulated cheese product. The particular number and type of ingredients to be employed depends entirely upon the particular type and flavour of imitation cheese desired and is a matter of routine, conventional food technology.

Water, of course, can also be an element in the production of the simulated cheese product, although the particular amount of water is not critical to the present invention; the amount used will be sufficient to impart softness or curd-like characteristics to the product and will typically be from 40 to 60% by weight of the cheese product.

The order of addition of the ingredients to produce the simulated cheese product is not critical, although the following is convenient. The various soluble salts used are first dissolved in a portion of the water to be employed; the casein or other additional protein is then added, with thorough mixing. A part of the remaining water is then added and mixed, followed by the vegetable protein isolate and the last of the water. The temperature of the mixture is then increased, and various other salts, preservatives, emulsifiers and possibly other additives are added, followed by the fat. The mixture is then thoroughly mixed and then, if necessary, deaerated to remove entrapped air and to provide a homogeneous smooth appearance. The heated mixture is then discharged into suitable containers and stored at refrigerated temperatures, in order to set the mixture into a homogeneous coherent mass.

The use of the enzymatically hydrolyzed vegetable protein isolate produced by the process of the

4

present invention allows an imitation or simulated cheese product to be produced having extremely desirable physical characteristics, particularly suitable melt characteristics and in this respect it simulates the properties of a cheese composed entirely of casein or a naturally produced cheese product. Various other physical properties of the cheese may also be simulated, depending upon the particular type of cheese desired and the particular physical characteristics desired.

The invention is further illustrated by the following Examples.

Examples
Fluorescamine reaction
In these Examples, the number of available amino end groups was measured by the procedure described below:

I. Equipment:
    A. Balance—±0.001 g sensitivity.
    B. Filter paper.
    C. Fluorimeter—with 390 nm excitation and 475 nm emission wavelength and a 1 cm path length cell.
    D. Funnel, long stem.
    E. Pipets, 10 ml seriological.
    F. Repipet—5 ml capacity.
    G. Repipet—1 ml capacity.
    H. Test tubes, disposable—13 mm×100 mm.
    I. Test tubes with screw caps—16 mm×150 mm.
    J. Vortex mixer.
    K. Wrist action—shaker.

II. Equipment preparation:
    A. Fluorimeter
    1. Warm up the fluorimeter at least 20 minutes before using.
    2. Set the excitation wavelength at 390 nm and the emission wavelength at 475 nm.

III. Reagents:
    A. Acetone, ACS grade.
    B. Fluorescamine.
    C. L—leucine, Reagent grade.
    D. 2-mercaptoethanol—Reagent grade.
    E. Sodium dodecyl sulphate—electrophoretic grade.
    F. Sodium phosphate monobasic, ACS grade.
    G. Sodium phosphate dibasic, ACS grade.
    H. Trichloroacetic acid—reagent grade.
    I. Urea, ACS grade.

IV. Reagent preparation:
    A. 0.01% Fluorescamine—in a 100 ml volumetric flask, dissolve 0.01 g of fluorescamine in 90 ml acetone. Fill to volume with acetone. This solution should be made fresh for each sample set.
    B. L-leucine standard—in a 100 ml volumetric flask, dissolve 210 mg of L-leucine in 90 ml of 0.1 M sodium phosphate buffer (pH 8.0). Fill the flask to volume with the buffer. This solution iş stable under refrigeration for 5 days.
    C. 0.1 M sodium phosphate buffer (pH 8.0)—in a volumetric flask, dissolve 26.8 g of sodium phosphate dibasic in 900 ml of distilled water. Fill to volume with distilled water. Add sodium phosphate monobasic until the solution pH is 8.0±0.1. This solution is stable for two months.
    D. 20% trichloroacetic acid—in a 1,000 ml volumetric flask, dissolve 200 g of trichloroacetic acid in 900 ml of distilled water. Remake solution for each days work.
    E. 8 M Urea—phosphate buffer—in a 1.000 ml volumetric flask, dissolve 480.5 g of urea in 600 ml of 0.1 M sodium phosphate buffer. This may require heating of the solution (140°F=60°C). Add 1% (based on urea) sodium lauryl sulphate (4.8 g) to the solution. Add 0.5% (based on urea) 2-mercaptoethanol (2.4 g) to the solution. Fill to volume with 0.1 *M* sodium phosphate buffer. Remake solution for each days work.

V. Procedure:
    A. Sample preparation
    1. Disperse 100 mg of each sample in 10.0 ml of 8 M urea-phosphate buffer in a test tube with a screw cap.
    2. Mix 6 ml of the L-leucine standard with 10.0 ml of 8 M urea—phosphate buffer in a test tube with a screw cap.
    3. Cap and vortex each sample. Shake in the wrist shaker until the sample is completely dissolved.

0 141 615

4. Add 1 ml of the protein solution to 1 ml of 20% TCA in a disposable test tube using the repipet. Vortex.

5. Allow the sample to rest 20 minutes at room temperature.

6. Filter the solution through the filter paper. Save the filtrate.

7. Add 25 ml of the filtrate to 2.0 ml of 0.1 $M$ sodium phosphate buffer using the repipet. Prepare sample duplicates.

8. Add 1.0 ml of 0.01% fluorescamine in acetone to the solutions *while* vortexing.

B. Sample evaluation

1. Evaluate the samples within 30 minutes to the fluorescamine addition.

2. Set the relative fluorescence of the standard to 80 on the fluorimeter (excitation wavelength—390 nm, emission wavelength—475 nm).

3. Measure the relative fluorescene intensity of each sample.

VI. Calculations:

The number of terminal $NH_2$ groups/$10^5$ grams of solids is calculated using the following equations:

$$\text{n moles } NH_2/\text{aliquot} = \frac{\text{Relative fluorescence} - 1.19}{1.07}$$

$$\text{moles } NH_2/10^5 \text{ grams of solids} = \frac{\text{n moles } NH_2/\text{aliquot}}{0.125 \text{ mg/aliquot}} \times 10^{-1}$$

Preparation of protein isolates

A number of protein isolates were prepared by the general procedure described below, but varying the amount of enzyme or time of hydrolysis to control the number of available amino end groups of the protein, measured by the procedure described above.

Defatted soybeans flakes were ground into flour and the ground flour was continuously extracted by the addition of water at 90°F (32°C) in a weight ratio of water to flour of about 10:1. A small amount of an anti-foaming agent and 0.5% by weight of sodium sulphite were also added.

The slurry of flour and water was pumped into a centrifuge and the aqueous extract was clarified by centrifugation. The aqueous extract containing solubilized protein was then adjusted to a pH value of 4.5 by the addition of hydrochloric acid, in order to precipitate the protein. The precipitated protein was separated and then diluted with water at 90°F (32°C) to form a slurry with a solids level of about 5% by weight. The slurry was then concentrated by centrifugation to a solids level of 12—14%. The slurry was then neutralized to a pH value of about 7.0.

The resulting slurry was then passed through a jet cooker at about 285°F (141°C) under positive pressure for about 9 seconds. The jet-cooked slurry was then discharged into a vacuum chamber held at 26 inches of Mercury (0.88 bars) in order to cool the slurry to a temperature of 120—125°F (49—52°C).

After cooling, bromelain was added to the slurry in the amount shown in the following Table and the slurry was maintained at a temperature of 120—125°F (49—52°C) and hydrolyzed for the time shown in the Table. After hydrolysis, the hydrolyzate was jet-cooled at a temperature of 285°F (141°C) for 9 seconds to terminate the hydrolysis, and it was then discharged into a second vacuum chamber maintained at a pressure of 24—26 inches of Mercury (0.81—0.88 bars), where it cooled to a temperature of about 140°F (60°C). The slurry was then srpay-dried at an exhaust temperature of about 200°F (93°C) to produce a dried, hydrolyzed protein isolate.

Each isolate was then measured to determine the number of available amino end groups by the precedure described above, the results being shown in the following Table.

Preparation of imitation cheese

Each of the hydrolyzed protein isolates was then used to prepare an imitation mozzarella cheese from the following recipe, in which percentages are by weight:

| | |
|---|---|
| Water | 45.58% |
| Rennet Casein | 22.20% |
| Partially Hydrogenated Soybean Oil | 20.00% |
| Isolated Soy Protein | 6.70% |
| Lactic Acid (59.5% w/v solution) | 2.17% |
| Sodium Chloride | 1.40% |
| Sodium Aluminium Phosphate | 1.00% |
| Sodium Citrate | 0.80% |
| Trisodium Phosphate | 0.15% |
| Sorbic Acid | 0.10% |

6

About one half of the total water was added at 90°F (32°C) to a mixer and the sodium citrate and trisodium phosphate were dissolved by mixing for about 15 seconds. The rennet casein was then added and mixed for about 5 minutes. About one quarter of the water, again at 90°F (32°C), was then added and mixed for about 5 minutes. The isolated soy protein and remaining water at 90°F (32°C) were added and mixed for 10 minutes.

The mixture was heated to 180°F (82°C) and mixed for 10 minutes. At the end of this time, the sodium aluminium phosphate, sodium chloride and sorbic acid were added and the whole was mixed for 4 minutes. The fat was pre-melted to 120—140°F (49—60°C), added to the mixture and mixed for 2 minutes. The lactic acid was added over a period of about 1 minute. The mixture was then deaerated for 2 minutes, after which it was discharged into a suitable container and stored at 40°F (4°C).

Testing

Each of the resulting imitation mozzarella cheeses was evaluated for physical characteristics, including melt and stringiness, by the procedures described below and the results are shown in the Table. Two control samples, both produced from an isolate prepared by the procedure described in US 3,642,490 (which employed jet cooking but not enzymatic hydrolysis) were also tested. The imitation mozzarella cheeses were evaluated for their melt characteristics and stringiness by preparing pizzas, which were each sprinkled with 40 g of the cheese and heated in an oven at 525°F (274°C) for 6 minutes.

Evaluation of melt characteristics

The degree of cheese melt on the pizza was subjectively rated on a scale of from 0 to 10, with 0 representing no melt and 10 being a high degree of melt. An ideal mozzarella cheese should have a melt rating of about 8, which represents about a 95% loss of shred identity.

Evaluation of stringiness

After the pizza had cooled for 1 minute, the cheese was lifted upwards with a fork and the length of the resulting string was measured when it broke. Three measurements were made and the average of these three is reported in the following Table.

TABLE 1

| Isolate sample | Hydrolysis time | Enzyme % by weight of protein solids |
|---|---|---|
| Control | 0 | 0 |
| Control | 0 | 0 |
| 1 | 15 | 0.040 |
| 2 | 19 | 0.025 |
| 3 | 15 | 0.030 |
| 4 | 19 | 0.025 |
| 5 | 15 | 0.035 |
| 6 | 15 | 0.030 |
| 7 | 19—26 | 0.040 |
| 8 | 13 | 0.035 |
| 9 | 14 | 0.037 |
| 10 | 13—26 | 0.040 |
| 11 | 14 | 0.037 |
| 12 | 14 | 0.037 |
| 13 | 19—26 | 0.040 |
| 14 | 15 | 0.035 |
| 15 | 14 | 0.037 |
| 16 | 14 | 0.037 |
| 17 | 17 | 0.035 |
| 18 | 13—26 | 0.040 |
| 19 | 15 | 0.030 |
| 20 | 15 | 0.030 |

**0 141 615**

TABLE 1 (cont'd)

| Available amino end groups/$10^5$g of solids | Melt characteristics | Stringiness |
|---|---|---|
| 3 | 5 | 0 |
| 3 | 5 | 0.3 |
| 6.2 | 6 | 10.0 |
| 8.5 | 6+ | 9.3 |
| 8.7 | 6+ | 6.5 |
| 8.8 | 7+ | 9.0 |
| 10.1 | 7 | 11.0 |
| 10.3 | 7+ | 8.3 |
| 11.0 | 7 | 7.7 |
| 11.2 | 7 | 10.8 |
| 11.6 | 7 | 12.3 |
| 11.9 | 7 | 8.3 |
| 12.9 | 7+ | 12.7 |
| 13.0 | 7+ | 9.3 |
| 13.0 | 7+ | 10.0 |
| 13.1 | 7 | 8.0 |
| 14.0 | 7 | 10.0 |
| 14.3 | 7+ | 10.7 |
| 15.0 | 7+ | 8.7 |
| 15.0 | 7 | 8.7 |
| 18.2 | 7+ | 12.7 |
| 18.8 | 8 | 15.0 |

The above results indicate that an isolate prepared by the process of the present invention imparts to an imitation cheese product incorporating its melt characteristics and stringiness very substantially better than those obtained using the type of protein isolate known in the prior art; the melt characteristics are, in most cases, very close to or identical with the characteristics of an ideal mozzarella cheese, whilst the stringiness of all of the products incorporating isolates according to the present invention is well in excess of an order of magnitude better than that of the products incorporating prior art isolates.

The number of available amino end groups can be measured by the fluorescamine reaction or by any other technique having a comparable effect. In practice, once hydrolysis conditions have been established for a given product from a given starting material, continual monitering of the process (to determine available amino end groups) may not be required, provided that conditions remain stable, or such monitering may not be required at all.

9

## Claims

1. A process for preparing a hydrolyzed vegetable protein isolate, in which protein is precipitated at its isoelectric point from an aqueous extract of a vegetable protein material and a slurry of the precipitated protein is subjected to enzymatic hydrolysis, characterized in that the enzymatic hydrolysis is terminated at a point to provide an isolate having from 5 to 19 moles of available amino end groups per $10^5$ g of solids, as measured by fluorescamine reaction or by any other technique having a comparable effect.

2. A process according to claim 1, in which, prior to isoelectric precipitation, said aqueous extract has a pH value of at least 6.0.

3. A process according to claim 2, in which said pH value is from 6.5 to 10.0.

4. A process according to any one of claims 1 to 3, in which aqueous extraction is effected at a temperature of from ambient to 120°F (49°C).

5. A process according to any one of the preceding claims, in which the pH is adjusted to a value of from 4.0 to 5.0 to achieve isoelectric precipitation.

6. A process according to any one of the preceding claims, in which said slurry has a solids content of from 3 to 30% by weight.

7. A process according to claim 6, in which said solids content is from 5 to 17% by weight.

8. A process according to any one of the preceding claims, in which said slurry has a pH value of from 3.0 to 8.5.

9. A process according to any one of the preceding claims, in which said protein is enzymatically hydrolyzed with a protease.

10. A process according to claim 9, in which said protease is bromelain.

11. A process according to any one of the preceding claims, in which said number of amino end groups is from 8 to 15 moles per $10^5$ g of solids.

12. A process according to any one of the preceding claims, in which said slurry of precipitated protein is dynamically heated in a jet cooker at a temperature of at least 220°F (104°C) for a time sufficient to expose reactive sites on the protein molecules and is then cooled prior to enzymatic hydrolysis.

13. A process according to claim 14, in which said slurry is dynamically heated at a temperature of from 220 to 400°F (104—204°C) for a period of from 7 to 100 seconds.

14. A process according to claim 12 or claim 13, in which said slurry is cooled prior to enzymatic hydrolysis by expelling said slurry into an atmosphere of substantially lower pressure.

15. A process according to any one of the preceding claims, in which the enzymatically hydrolyzed protein isolate is dewatered to provide a dried isolate.

16. A process according to claim 15, in which dewatering is effected by spray drying.

17. A process according to any one of the preceding claims, in which said vegetable protein material is a material derived from soybeans.

18. A process according to claim 17, in which said material is defatted soy protein material.

19. An imitation cheese product in which all or part of the protein content is provided by a hydrolyzed vegetable protein isolate prepared by a process as claimed in any one of the preceding claims.

## Patentansprüche

1. Verfahren zur Herstellung eines hydrolysierten Pflanzenprotienisolates, bei dem man das Protein bei seinem isoelektrischen Punkt aus einem wässrigen Extrakt von Pflanzenproteinmaterial ausfällt und eine Aufschlämmung aus dem ausgefällten Protein einer enzymatischen Hydrolyse unterwirft, dadurch gekennzeichnet, dass man die enzymatische Hydrolyse an einem Punkt beendet, bei dem man ein Isolat erhält, welches 5 bis 19 Mol an verfügbaren Aminoendgruppen pro $10^5$ g Feststoffe, gemessen durch Fluorescamin-Reaktion oder durch irgendeine andere Technik mit einer vergleichbaren Wirkung, erhält.

2. Verfahren gemäss Anspruch 1, bei dem vor der isoelektrischen Ausfällung der wässrige Extrakt einen pH-Wert von wenigstens 6,0 hat.

3. Verfahren gemäss Anspruch 2, bei dem der pH-Wert 6,5 bis 10,0 beträgt.

4. Verfahren gemäss einem der Ansprüche 1 bis 3, bei dem man die wässrige Extraktion bei einer Temperatur von Umgebungstemperatur bis 49°C (120°F) durchführt.

5. Verfahren gemäss einem der vorhergehenden Ansprüche, bei dem man den pH-Wert auf einen Wert zwischen 4,0 und 5,0 zur Erzielung der isoelektrischen Ausfällung einstellt.

6. Verfahren gemäss einem der vorhergehenden Ansprüche, bei dem die Aufschlämmung einen Feststoffgehalt von 3 bis 30 Gew.% hat.

7. Verfahren gemäss Anspruch 6, bei dem der Feststoffgehalt 5 bis 17 Gew.% beträgt.

8. Verfahren gemäss einem der vorhergehenden Ansprüche, bei dem die Aufschlämmung einen pH-Wert von 3,0 bis 8,5 hat.

9. Verfahren gemäss einem der vorhergehenden Ansprüche, bei dem das Protein enzymatisch mit einer Protease hydrolysiert wird.

10. Verfahren gemäss Anspruch 9, bei dem Protease Bromelain ist.

11. Verfahren gemäss einem der vorhergehenden Ansprüche, bei dem die Anzahl der Amino-Endgruppen 8 bis 15 Mol pro $10^5$ g der Feststoffe beträgt.

12. Verfahren gemäss einem der vorhergehenden Ansprüche, bei dem man die Aufschlämmung aus ausgefälltem Protein dynamisch in einem Jet-Kocher bei einer Temperatur von wenigstens 104°C (220°F) während eine rausreichenden Zeit erhitzt, um reaktive Stellen an den Proteinmolekülen freizulegen und dann vor der enzymatischen Hydrolyse kühlt.

13. Verfahren gemäss Anspruch 14, bei dem die Aufschlämmung dynamisch auf eine Temperatur von 104 bis 204°C (220 bis 400°F) während eines Zeitraums von 7 bis 100 Sekunden erhitzt wird.

14. Verfahren gemäss Anspruch 12 oder 13, bei dem die Aufschlämmung vor der enzymatischen Hydrolyse gekühlt wird, indem man die Aufschlämmung in eine Atmosphäre von wesentlich niedrigerem Druck ausstösst.

15. Verfahren gemäss einem der vorhergehenden Ansprüche, bei dem das enzymatische, hydrolysierte Proteinisolat unter Erhalt eines trockenen Isolates entwässert wird.

16. Verfahren gemäss Anspruch 15, bei dem man das Entwässern durch Sprühtrocknung durchführt.

17. Verfahren gemäss einem der vorhergehenden Ansprüche, bei dem das Pflanzenproteinmaterial ein von Sojabohnen erhaltenes Material ist.

18. Verfahren gemäss Anspruch 17, bei dem das Material entfettetes Sojaproteinmaterial ist.

19. Imitations-Käseprodukt, bei dem der gesamte oder ein Teil des Proteingehaltes von einem hydrolysierten Pflanzenproteinisolat stämmt, welches mittels eines Verfahrens gemäss einem der vorhergehenden Ansprüche hergestellt wurde.

## Revendications

1. Procédé de préparation d'un isolat de protéine végétale hydrolysée, dans lequel on précipite la protéine à son point isoélectrique d'un extrait aqueux d'un matériau protéinique végétal et on soumet une suspension de la protéine précipitée à une hydrolyse enzymatique, caractérisé en ce qu'on arrête l'hydrolyse enzymatique à un certain degré afin d'obtenir un isolat ayant de 5 à 19 moles de groupe terminal amino disponible par $10^5$ g de matière séche, par mesure à l'aide d'une réaction à la fluorescamine ou de toute autre technique ayant un affet compatable.

2. Procédé selon la revendication 1, dans lequel avant la précipitation isoélectrique, ledit extrait aqueux a une valeur de pH d'au moins 6,0.

3. Procédé selon la revendication 2, dans lequel ladite valeur de pH est de 6,5 à 10,0.

4. Procédé selon l'une quelconque des revendications 1 à 3, dans lequel on effectue l'extraction aqueuse à une température allant de l'ambiante à 120°F (49°C).

5. Procédé selon l'une quelconque des revendications précédentes, dans lequel on ajuste le pH à une valeur de 4,0 à 5,0 pour obtenir une précipitation isoélectrique.

6. Procédé selon l'une quelconque des revendications précédentes, dans lequel ladite suspension a une teneur en matière séche de 3 à 30% en poids.

7. Procédé selon la revendication 6, dans lequel ladite teneur en matière séche est de 5 à 17% en poids.

8. Procédé selon l'une quelconque des revendications précédentes, dans lequel ladite suspension a une valeur de pH de 3,0 à 8,5.

9. Procédé selon l'une quelconque des revendications précédentes, dans lequel ladite protéine est hydrolysée enzymatiquement avec une protéase.

10. Procédé selon la revendication 9, dans lequel ladite protéase est la broméline.

11. Procédé selon l'une quelconque des revendications précédentes, dans lequel le nombre de groupe terminal amino est de 8 à 15 moles par $10^5$ g de matière séche.

12. Procédé selon l'une quelconque des revendications précédentes, dans lequel on soumet ladite suspension de protéine précipitée à un chauffage dynamique dans un cuiseur à jet à une température d'au moins 220°F (104°C) pendant un temps suffisant pour exposer les sites réactifs sur les molécules de protéine puis on la refroidit avant l'hydrolyse enzymatique.

13. Procédé selon la revendication 12, dans lequel on soumet ladite suspension à un chauffage dynamique à une température de 220 à 400°F (104—204°C) pendant une durée de 7 à 100 secondes.

14. Procédé selon la revendication 12 ou la revendication 13, dans lequel on refroidit ladite suspension avant l'hydrolyse enzymatique en expulsant ladite suspension dans une atmosphère ayant une pression sensiblement plus faible.

15. Procédé selon l'une quelconque des revendications précédentes, dans lequel on enlève l'eau de l'isolat de protéine hydrolysée enzymatiquement afin d'obtenir un isolat sec.

16. Procédé selon la revendication 15, dans lequel on envlève l'eau par séchage par pulvérisation.

17. Procédé selon l'une quelconque des revendications précédentes, dans lequel le matériau protéinique végétal est un matériau dérivé du soja.

18. Procédé selon la revendication 17, dans lequel ledit matériau est un matériau protéinique dégraissé de soja.

19. Produit imitant le fromage dans lequel toute ou une partie de la teneur en protéine est apportée par un isolat de protéine végétale hydrolysée préparé selon un procédé revendiqué dans l'une quelconque des revendications précédentes.